# EUROPÄISCHE PATENTSCHRIFT

(11) **EP 1 314 588 B1**
(45) Veröffentlichungstag und Bekanntmachung des Hinweises auf die Patenterteilung: **13.09.2006**
(21) Anmeldenummer: 02021932.5
(22) Anmeldetag: 28.09.2002
(51) Int. Cl.: B60G 21/055, B60G 21/10

(54) **Stabilisatoranordnung für ein Kraftfahrzeug**
Anti-roll bar assembly for a vehicle
Dispositif de barre stabilisatrice pour véhicule automobile

(30) Priorität: 21.11.2001 DE 10157085
(43) Veröffentlichungstag der Anmeldung: 28.05.2003
(73) Patentinhaber: Dr.Ing. h.c.F. Porsche Aktiengesellschaft, 70435 Stuttgart (DE)
(72) Erfinder: Germano, Francesco, 74321 Bietigheim-Bissingen (DE); Mevissen, Peter, 71272 Renningen (DE)

(56) Entgegenhaltungen:
- FR-A- 2 670 716
- FR-A- 2 697 474
- SU-A- 1 824 327
- US-A- 5 251 926
- US-A- 6 022 030
- PATENT ABSTRACTS OF JAPAN Bd. 0092, Nr. 82 (M-428), 9. November 1985 (1985-11-09) & JP 60 124514 A (NIHON HATSUJIYOU KK), 3. Juli 1985 (1985-07-03)

## Beschreibung

Bei der Erfindung wird ausgegangen von einer Stabilisatoranordnung für ein Kraftfahrzeug, gemäß Oberbegriff des Anspruchs 1.

Die US-A-5 251 926 beschreibt eine gattungsbildende Stabilisatoranordnung für ein Kraftfahrzeug, die einen zweiteiligen Torsionsstab aufweist, dessen beide Stabteile mit ihren ersten Enden mit einer Radaufhängung einer zwei Räder umfassenden Radachse verbunden sind. Zwischen den zweiten Enden der Stabteile ist eine Kupplung angeordnet, die die beiden Stabteile formschlüssig verbinden oder voneinander trennen kann. Für das formschlüssige Verbinden besitzt die Kupplung zwei Kupplungselemente, die jeweils zumindest zwei Formschlusselemente aufweisen, wobei die Kupplungselemente bei getrennter Kupplung relativ zueinander verdrehbar sind. An einem der beiden Kupplungselemente sind ferner Eingriffselemente linear verschiebbar gehalten, die zwar unabhängig voneinander gelagert sind, jedoch über eine Betätigungseinrichtung lediglich nacheinander in einer fest vorgegebenen Reihenfolge verlagerbar sind, um die Kupplung trennen zu können. Die Eingriffselemente sind bezüglich der Längenerstreckung des Torsionsstabes hintereinander, also in axialer Richtung versetzt zueinander angeordnet, und in einem fest mit dem einen Stabteil verbundenen Gehäuse verschiebbar gelagert. Für das Schließen der Kupplung können die Eingriffselemente in entsprechend axial hintereinander angeordnete Ausnehmungen in den anderen Stabteil eingeschoben werden. Die Ausnehmungen weisen - in Umfangsrichtung des Stabteils gesehen - unterschiedliche Weiten auf, wodurch das schrittweise Schließen der Kupplung ermöglich wird. Nachteilig ist, dass die Drehmomentübertragung zwischen den beiden Stabteilen lediglich durch ein einziges Eingriffselement erfolgt.

Die SU-A-1 824 327 befasst sich mit einer Stabilisatoranordnung, bei der zwischen zwei Stabteilen ein Getriebe nach Art eines Differentials als Kupplung angeordnet ist. Die Kupplung wird dadurch geschlossen, dass das Gehäuse mit den darin gelagerten Zahnrädern formschlüssig verbunden wird. Dafür ist ein einziges Eingriffselement vorgesehen, das als schwenkbare Rastklinke ausgebildet ist, die über eine Betätigungseinrichtung mit einem außen verzahnten Zahnrad in Eingriff gebracht werden kann. Zum Trennen der Kupplung wird die Rastklinke aus der Verzahnung heraus geschwenkt.

Ferner zeigt die FR-A-2 697 474 eine Stabilisatoranordnung mit einem einteiligen Torsionsstab, der über einen Hydraulikzylinder mit der Radaufhängung verbunden ist. Ist der Hydraulikzylinder hydraulisch verblockt, d.h. beide Arbeitskammern sind verschlossen, kann ein Torsionsmoment von einer Radaufhängung zur anderen Radaufhängung übertragen werden, was einer geschlossenen Kupplung entspricht. Um beide Radaufhängungen voneinander zu entkoppeln, werden die beiden Arbeitskammern über eine Drossel miteinander verbunden, wodurch sich der Kolben im Hydraulikzylinder bewegen kann, was einer geöffneten Kupplung entspricht.

Eine andere Stabilisatoranordnung ist aus der DE 199 23 100 C1 bekannt. Sie umfasst einen zweiteiligen Torsionsstab, dessen beide Stabteile mit ihren ersten Enden mit einer Radaufhängung einer zwei Räder umfassenden Radachse verbindbar sind. Die zweiten, benachbart zueinander liegenden Enden der Stabteile sind über eine Kupplung zur Übertragung eines Torsionsmoments formschlüssig verbindbar und trennbar, wenn kein Torsionsmoment übertragen werden soll. Hierfür besitzt die Kupplung ein erstes und zweites Kupplungselement, die zum formschlüssigen Verbinden jeweils wenigstens zwei starre Formschlusselemente besitzen. Bei getrennter Kupplung sind beide Kupplungselemente relativ zueinander verdrehbar, wodurch die beiden Stabteile des Torsionsstabes entkoppelt sind und so eine Stabilisierung der Wankbewegung des Fahrzeugs vermindern. Für die Betätigung der Kupplungseinrichtung umfasst die Stabilisatoranordnung ferner eine Betätigungseinrichtung, die die beiden Kupplungselemente voneinander trennt. Bei der bekannten Stabilisatoranordnung umfasst die Betätigungseinrichtung einen Hydraulikzylinder, der über eine Ventilanordnung mit einer Fördermittelpumpe oder einem Tank für Hydraulikflüssigkeit verbunden ist. Der Hydraulikzylinder betätigt das eine der beiden Kupplungselemente in axialer Richtung, wodurch beide Formschlusselemente dieses Kupplungselements gleichzeitig aus den Formschlusselementen des anderen Kupplungselements herausgezogen werden. Nachteilig ist dabei, dass bei tordiertem Torsionsstab das eine Formschlusselement des einen Kupplungselements zwischen den beiden anderen Formschlusselementen des anderen Kupplungselements eingeklemmt werden kann, wodurch in manchen Fällen zum Trennen der Kupplung hohe Betätigungskräfte aufzubringen sind. Außerdem ist für die Betätigungseinrichtung ein hoher technischer Aufwand notwendig, beispielsweise für Hydraulikventile, Hydraulikleitungen, Pumpe usw., wodurch sich ein hohes Gewicht und hohe Kosten ergeben.

Aufgabe der Erfindung ist es daher, eine Stabilisatoranordnung der eingangs genannten Art anzugeben, die bei verbundener Kupplung eine spielfreie Übertragung des Torsionsmomentes im Torsionsstab ermöglicht, die außerdem mit einer Betätigungseinrichtung schaltbar ist, die gegenüber dem Stand der Technik geringere Antriebskräfte bzw. Betätigungskräfte aufbringen muss, und die ferner hinsichtlich der Drehmomentübertragung zwischen den Stabteilen optimiert ist.

Gelöst wird diese Aufgabe mit einer Stabilisatoranordnung für ein Kraftfahrzeug, die die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass beim Trennen der Kupplung die Eingriffselemente nahezu kraftfrei und daher auch mit sehr geringer Betätigungskraft außer Eingriff mit den Formschlusselementen gebracht werden können, wodurch außerdem ein geringer Verschleiß an der Kupplung entsteht. Überdies kann die Betätigungseinrichtung für die Formschlusselemente bzw. Eingriffselemente kompakt aufgebaut werden, da keine hohen Betätigungskräfte aufgebracht werden müssen. Erreicht werden diese Vorteile dadurch, dass jeweils das Eingriffselement außer Eingriff mit dem Formschlusselement gebracht wird, welches Eingriffselement gerade keine Umfangskraft erfährt, die beim Drehen des Torsionsstabes entsteht. Die Kupplung wird also immer lastfrei geöffnet. Dadurch, dass mehrere über den Umfang des Kupplungselements verteilt angeordnete Formschlussabschnitte und entsprechende Eingriffselemente vorgesehen sind, sind bei vollständig geschlossener Kupplung mehrere Eingriffselemente mit entsprechenden Formschlussabschnitten verbunden, was die Drehmomentübertragung verbessert bzw. die Belastung für die einzelnen Eingriffselemente reduziert. Ferner ist durch Anordnung der Formschlusselemente in Umfangsrichtung gesehen, wobei jeweils mehrere Formschlusselemente einen Formschlussabschnitt bilden, die jeweils mit den Eingriffselementen zusammenwirken, bei getrennter Kupplung ein Wiedereinkuppeln der beiden Kupplungselemente auch dann möglich, wenn die beiden Kupplungselemente noch relativ zueinander verdreht sind.

Besonders bevorzugt wird nach Anspruch 2 eine Ausführungsvariante, bei der zwei Formschlussabschnitte mit den Ihnen zugeordneten Eingriffselementen jeweils eine Verdrehblockiereinrichtung bilden. Zwei Verdrehblockiereinrichtungen bilden ein Blockiereinrichtungspaar. Jede der Verdrehblockiereinrichtungen bewirkt jedoch nur eine Drehblockierung in einer Relativverdrehrichtung zwischen den Kupplungselementen. In der anderen Relativverdrehrichtung besitzt jede Verdrehblockiereinrichtung einen Freilauf, wobei die Drehblockierrichtung und die Freilaufrichtung der einen Verdrehblockiereinrichtung jeweils entgegengesetzt zu der Drehblockierrichtung und der Freilaufrichtung der anderen Verdrehblockiereinrichtung orientiert sind. Mit dieser Ausgestaltung wird in besonders vorteilhafter Weise ein Rückstellen in Grundstellung der beiden relativ zueinander verdrehten Kupplungselemente ermöglicht.

Bei einem bevorzugten Ausführungsbeispiel mit den in Anspruch 5 genannten Merkmalen werden die Eingriffselemente auch bei einer Fehlfunktion der Betätigungseinrichtung mit den Formschlusselementen in Eingriff gehalten, so dass nach dieser Ausgestaltungsvariante eine sog. Fail - Safe - Funktion gegeben ist.

Um die Eingriffselemente unabhängig voneinander durch die Betätigungseinrichtung ohne große Betätigungskraft verlagern zu können, ist - gemäß Anspruch 6 - eine vorspannbare Betätigungsfeder für die Eingriffselemente vorgesehen. Bei vorgespannter Betätigungsfeder sind zwar beide Eingriffselemente mit der Federkraft beaufschlagt, es wird jedoch das Eingriffselement außer Eingriff mit den Formschlusselementen gebracht, welches gerade keine Umfangskraft erfährt, so dass ein einfaches Bewegen dieses Eingriffselements gegeben ist. Die Betätigungsfeder wird dabei so vorgespannt, dass die bereitgestellte Federvorspannkraft größer ist als die Kraft der Haltefeder und geringer als die aufzubringende Kraft, die nötig wäre, um ein unter Umfangskraft stehendes Eingriffselement zu verschwenken. Wird die Vorspannung der Betätigungsfeder wieder abgebaut, bringen die Haltefedern die Eingriffselemente wieder in Eingriff mit den Formschlusselementen, wodurch die Kupplung wieder geschlossen wird. An Stelle der indirekten Betätigung der Eingriffselemente über die Betätigungsfeder mit nur einer Betätigungseinrichtung könnten auch mehrere unabhängig voneinander ansteuerbare Betätigungseinrichtungen vorgesehen sein, wobei jedem Eingriffselement eine Betätigungseinrichtung zugeordnet werden kann.

Das Vorspannen der Betätigungsfedern erfolgt gemäß Anspruch 8 durch die Betätigungseinrichtung, die einen elektromotorischen Antrieb und ein Schaltelement (Anspruch 7) umfassen kann, so dass die Betätigungseinrichtung kostengünstig ist und überdies in kompakter Ausführung in die Kupplung integriert werden kann.

Besonders bevorzugt wird eine Ausführungsvariante nach Anspruch 9, bei der die Formschlussabschnitte durch Verzahnungsabschnitte mit mehreren hintereinander liegenden Zähnen realisiert sind, welche Zähne die Formschlusselemente des ersten Kupplungselements bilden. Die Eingriffselemente des zweiten Kupplungselements werden als relativ zum jeweiligen Verzahnungsabschnitt bewegbar gelagerte Rastklinken mit zumindest einer Rastnase ausgebildet. Diese Ausführungsvariante ermöglicht bei geringer Baugröße bzw. geringem Bauraum für das Herausschwenken der Rastklinken eine gute Momentübertragung zwischen den beiden Kupplungselementen.

Der vorstehend erwähnte Freilauf in einer Relativerdrehrichtung und die Drehblockierung in der anderen Relativverdrehrichtung wird gemäß Anspruch 10 auf einfache Art und Weise durch die Flankenform der Zähne und der Rastnase erreicht, wobei die Flankenform in Verdrehblockierrichtung selbsthemmend ausgebildet ist und in Freilaufrichtung eine eine Verlagerungsbewegung der Rastklinke unterstützende Kontur besitzt, welche Verlagerungsbewegung ein außer Eingriff bringen der Rastnasen mit den Verzahnungsabschnitten bewirkt. Bei einer Relativdrehung zwischen dem ersten und zweiten Kupplungselement in der Freilaufrichtung wird die entsprechende Rastklinke durch die Flankenform über die einzelnen Zähne angehoben. In der anderen Verdrehrichtung wird die Rastklinge an dem jeweiligen Zahn gehalten, wodurch in dieser Verdrehrichtung eine Drehmomentübertragung zwischen beiden Kupplungselementen möglich ist.

Als besonders günstig hat es sich herausgestellt, wenn - wie nach Anspruch 11 vorgesehen - die Verzahnungsabschnitte jeweils als Sägeverzahnung ausgeführt sind, bei der jeder Zahn zwei unterschiedlich steil ausgebildete Flanken besitzt. Die beiden Verzahnungsabschnitte einer Verdrehblockiereinrichtung sind dabei entgegen gesetzt orientiert, so dass der vorstehend erwähnte Freilauf bzw. die Selbsthemmung durch die Sägezahnform gegeben ist.

Die Erfindung wird nachfolgend anhand von Ausführungsbeispielen mit Bezug auf die Zeichnung näher erläutert.

Es zeigen:
- Fig. 1A: eine Stabilisatoranordnung an einer zwei Räder umfassenden Radachse,
- Fig. 1B: eine Seitenansicht der Stabilisatoranordnung nach Fig. 1A,
- Fig. 2: eine Schnittdarstellung durch ein erstes Ausführungsbeispiel einer Kupplung der Stabilisatoranordnung entlang der Linie II - II in Fig. 1B,
- Fig. 3 + 4: jeweils eine perspektivische Ansicht der Kupplungseinrichtung ohne Kupplungsgehäuse,
- Fig. 5: eine perspektivische Darstellung eines zweiten Ausführungsbeispiels einer Kupplung ohne Kupplungsgehäuse und
- Fig. 6 - 9: Kupplungselemente der Kupplung in unterschiedlichen Kupplungsstellungen.

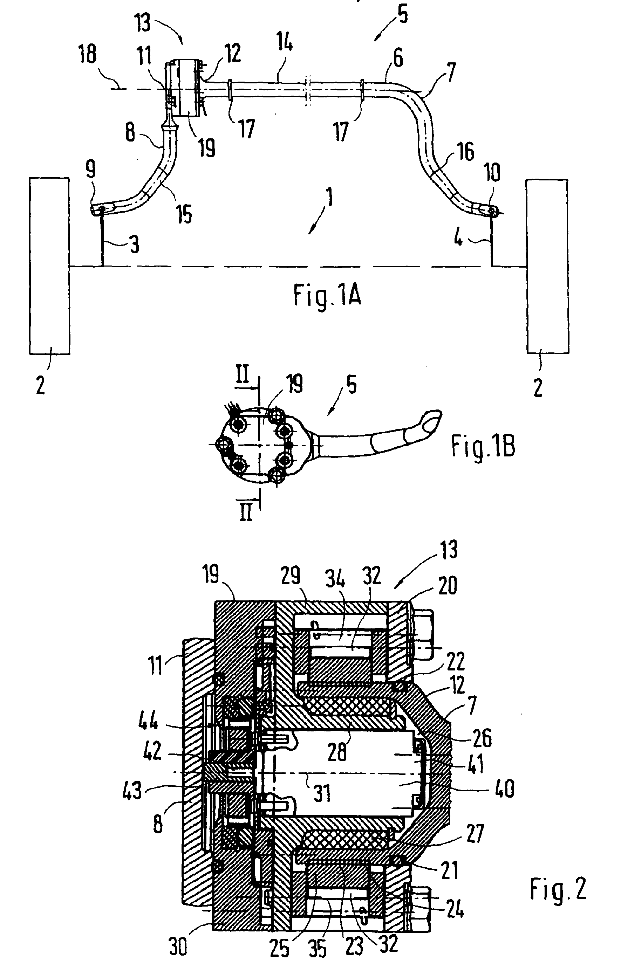

Fig. 1A zeigt eine Radachse 1 mit zwei Rädern 2, die an lediglich schematisch dargestellten Radaufhängungen 3 und 4 angelenkt sind. Im Wesentlichen parallel zur Radachse 1 ist eine Stabilisatoranordnung 5 angeordnet, die einen zweiteiligen Torsionsstab 6 mit zwei Stabteilen 7 und 8 besitzt. Die ersten äußeren Enden 9 und 10 der Stabteile 7 und 8 sind mit der jeweiligen Radaufhängung 3 bzw. 4 verbunden. Die zweiten, einander zugewandten Enden 11 und 12 der Stabteile 7 und 8 sind über eine Kupplung 13 zwecks Übertragung eines Torsionsmomentes formschlüssig miteinander verbindbar oder trennbar, wenn keine Momentübertragung stattfinden soll. Der im Wesentlichen U - förmige Torsionsstab 6 besitzt eine Basis 14 sowie von der Basis 14 ausgehende Schenkel 15 und 16, deren Schenkelenden die ersten Enden 9 und 10 der Stabteile 7 und 8 bilden. Die Basis 14 wird auch als Rückenbereich bezeichnet, in dem die Kupplung 13 liegt. Rein beispielhaft ist sie hier im Übergangsbereich zwischen der Basis 14 und dem Schenkel 15 angeordnet, die Kupplung 13 kann jedoch an beliebiger Stelle im Rückenbereich vorgesehen werden.

Die Stabilisatoranordnung 5 ist außerdem mit dem hier nicht dargestellten Aufbau eines Kraftfahrzeugs verbunden, insbesondere über an der Basis 14 angreifende Lager 17 am Aufbau befestigt, wobei die Lager 17 eine Drehung um die Rückenachse 18 des Torsionsstabes 6 zulassen.

Fig. 1B zeigt eine Seitenansicht auf ein Kupplungsgehäuse 19 der Kupplung 13. Der Stabteil 8 ist - wie in Fig. 2 zu sehen - mit seinem Ende 11 verdrehfest mit dem Kupplungsgehäuse 19 verbunden. Der andere Stabteil 7 durchgreift mit seinem Ende 12 eine in dem Kupplungsgehäusedeckel 20 vorgesehene Öffnung 21 und ist gegenüber dieser Öffnung 21 mit einer umlaufenden Dichtung 22 abgedichtet.

Anhand der Fig. 2 bis 4 wird im Folgenden die die beiden Stabenden 11 und 12 formschlüssig verbindende oder trennende Kupplung 13 näher erläutert. Der Stabteil 7 durchgreift mit seinem Ende 12 den Deckel 20 und weist an seinem innerhalb des Gehäuses 19 liegenden Bereich eine Außenverzahnung 23 auf, die in eine Innenverzahnung 24 an einem ersten Kupplungselement 25 der Kupplung 13 angreift. An seinem Ende 12 besitzt der Stabteil 7 außerdem eine zentrale Axialausnehmung 26, in der ein Lager 27, insbesondere Gleitlager, angeordnet ist, welches sich auf einem rohrförmigen Flansch 28 abstützt, der mit einem Gehäusetopf 29 des Kupplungsgehäuses 19 verbunden ist. Der Gehäusetopf 29 ist fest mit einer Aufnahmeplatte 30 des Kupplungsgehäuses 19 verbunden, an welcher das zweite Ende 11 des Stabteils 8 festgelegt ist. Über das Lager 27 ist somit das zweite Ende 12 des Stabteils 7 drehentkoppelt von dem Ende 11 des Stabteils 8, so dass diese beiden Stabteile relativ zueinander um eine Drehachse 31 verdrehbar sind, wenn die Kupplung 13 getrennt ist, worauf weiter unten eingegangen wird.

Für eine Drehmomentübertragung von dem Stabteil 7 zu dem Stabteil 8 bzw. umgekehrt besitzt das drehfest mit dem Stabteil 7 verbundene erste Kupplungselement 25 wenigstens zwei auf der der Innenverzahnung 24 gegenüberliegenden Umfangswand angeordnete erste Formschlusselemente 32 und 33, die mit zweiten Formschlusselementen 34 und 35 zusammenwirken, die als relativ zu den ersten Formschlusselementen 32, 33 verlagerbare Eingriffselemente 36 und 37 ausgebildet und um Schwenkachsen 38 radial verschwenkbar an dem Gehäusetopf 29 und/oder an dem Deckel 20 gelagert sind. Das Kupplungsgehäuse und die zweiten Formschlusselemente 34 und 35 bilden somit ein zweites Kupplungselement 39 der Kupplung 13, wobei die Eingriffselemente am zweiten Kupplungselement 39 bewegbar angelenkt sind. Sind die Eingriffselemente 36 und 37 mit den ihnen zugeordneten Formschlusselementen 32 und 33 in Eingriff, ist die Kupplung 13 geschlossen. Eine Drehmomentübertragung von dem Stabteil 7 kann mithin über das erste Kupplungselement 25 mit seinen Formschlusselementen 32 und 33, über das zweite Kupplungselement 39 mit seinen Formschlusselemente 34, 35 und seinem Kupplungsgehäuse 19 auf den Stabteil 8 und umgekehrt erfolgen.

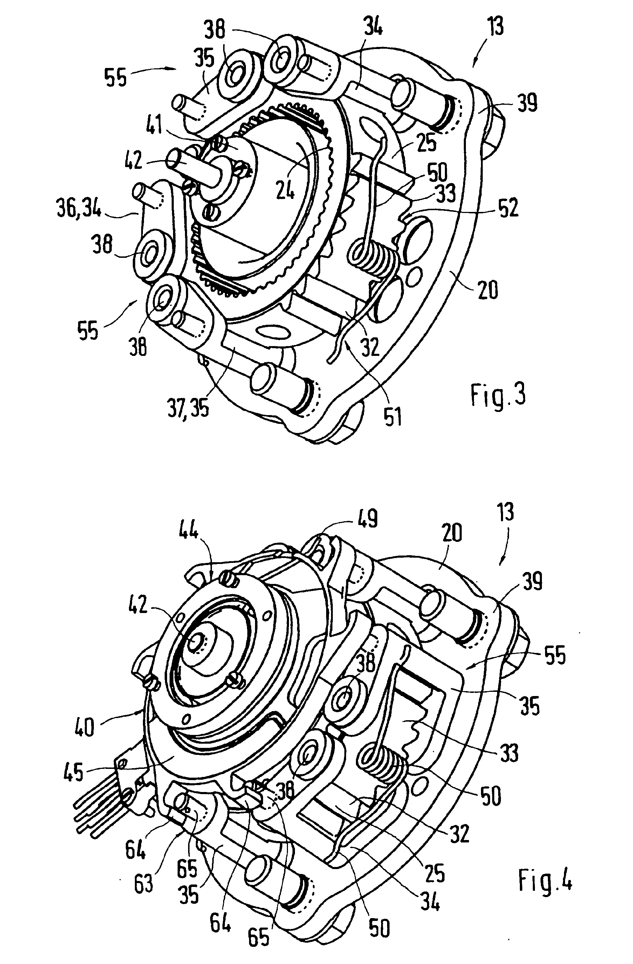

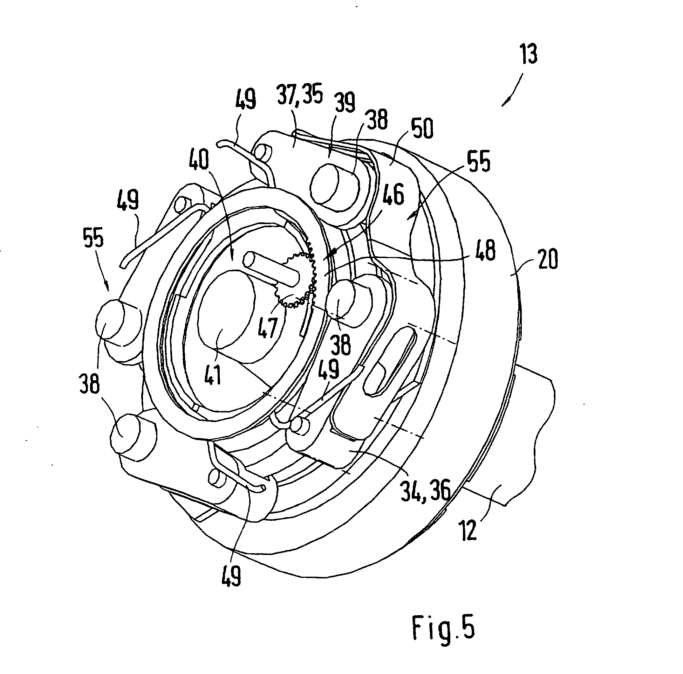

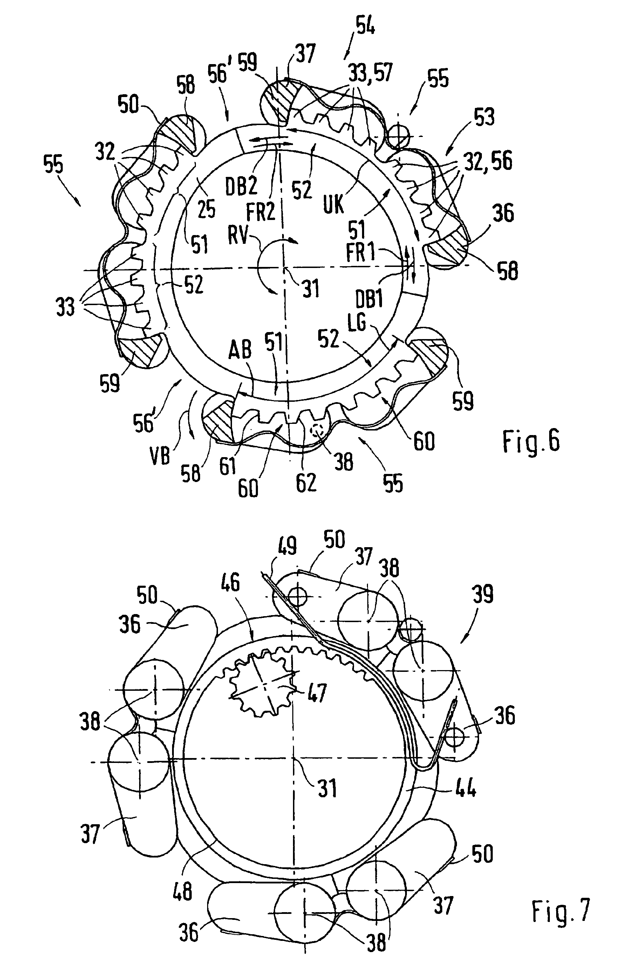

Zum Trennen der Kupplung 13, d. h. zum außer Eingriff bringen der ersten und zweiten Formschlusselemente 32, 33 und 34, 35 ist eine Betätigungseinrichtung 40 vorgesehen. Sie verschwenkt die zweiten Formschlusselemente 34 und 35 radial nach außen. Die Betätigungseinrichtung 40 besitzt einen Antrieb, der ein Schaltelement der Betätigungseinrichtung 40 antreibt, das die Eingriffselemente 36 und 37 unabhängig voneinander bewegt. Der Antrieb wird beispielsweise von einem elektrischen Antriebsmotor 41 gebildet, dessen Motorachse 42 über ein Ritzel 43 eine das Schaltelement bildende Schaltkulisse 44 betätigt, die als drehbar gelagerter und über den Motor 41 angetriebener Ring 45 ausgebildet ist. Die Schaltkulisse 44 selbst kann über ein Planetengetriebe 46 (Fig. 5 und 7) angetrieben werden, welches wenigstens ein Planetenrad 47 besitzt, das mit einem Hohlrad 48 kämmt. Hohlrad 48 und Ring 45 können einstückig ausgebildet sein. Das Ritzel 43 kann das Sonnenrad des Planetengetriebes 46 bilden. In der Schaltkulisse 44 sind in entsprechenden Führungsausnehmungen als Schenkelfedern ausgebildete Betätigungsfedern 49 eingelegt, die bei einer Drehung um die Drehachse 31 der Schaltkulisse 44 vorgespannt werden und so die Eingriffselemente 36 und 37 mit einer radial nach außen wirkenden Vorspannkraft beaufschlagen, wodurch die Eingriffselemente 36 und 37 außer Eingriff mit den ersten Formschlusselementen 32 und 33 bringbar sind. Die von den vorgespannten Betätigungsfedern 49 aufgebrachten Federkräfte sind größer als die auf die Eingriffselemente 36 und 37 wirkende Haltekräfte der Haltefedern 50, die die Eingriffselemente in Richtung der Drehachse 31 drängen, also nach radial innen. Die Haltefedern können - wie in den Fig. 3 und 4 dargestellt - als Schenkelfedern oder - wie in Fig. 5 ersichtlich - als m-förmig gebogene Blattfedern ausgebildet sein. Dadurch, dass die Eingriffselemente 36 und 37 jeweils auf einer eigenen Schwenkachse 38 unabhängig voneinander bewegbar gelagert sind und über die Betätigungseinrichtung 40 unabhängig voneinander verlagerbar sind, wird bei zu trennender Kupplung 13 lediglich das Eingriffselement 36 oder 37 verschwenkt, das keine Umfangskraft UK (Fig. 6) erfährt, die durch ein in eines der Stabteile 7 oder 8 eingeleitetes Drehmoment erzeugt wird. Da die Eingriffselemente 36 und 37 nicht direkt über den Elektromotor 41 angetrieben sind, sondern eine Entkopplung über die Betätigungsfedern 49 vorliegt, wird die von den Betätigungsfedern 49 bereit gestellte Betätigungsfederkraft nur das Eingriffselement 36 oder 37 radial nach außen schwenken, welches - wie eben erwähnt - keine Umfangskraft UK erfährt.

Aus Fig. 6 ist ersichtlich, dass das erste Kupplungselement 25 wenigstens zwei Formschlussabschnitte 51 und 52 mit mehreren in Umfangsrichtung des ersten Kupplungselements 25 in Reihe angeordneten Formschlusselementen 32 bzw. 33 besitzt, die mit den am zweiten Kupplungselement 39 angeordneten Eingriffselementen 36 und 37 zusammenwirken. Jeweils zwei Formschlussabschnitte 51 und 52 bilden mit den ihnen zugeordneten Eingriffselementen 36 und 37 jeweils eine Verdrehblockiereinrichtung 53 und 54, die zusammen ein Blockiereinrichtungspaar 55 darstellen. Durch die Kontur der ersten und zweiten Formschlusselemente 32 bis 35 wirkt jede Verdrehblockiereinrichtung 53 bzw. 54 lediglich in einer Relatiwerdrehrichtung RV als Drehblockierung und in der anderen Relativverdrehrichtung RV weist jede Verdrehblockiereinrichtung einen Freilauf auf. Der Freilauf wird dadurch eingeleitet, dass das jeweilige Eingriffselement 36 bzw. 37 durch die entsprechende Kontur der Formschlusselemente 32 bis 35 bei einer Relatiwerdrehung zwischen dem ersten und zweiten Kupplungselement 25, 39 radial nach außen gedrängt wird und bei einer weiteren Relatiwerdrehung zwischen den beiden darauffolgenden Formschlusselementen 32 bzw. 33 wieder einrasten kann. Bei entgegengesetzt anliegendem Drehmoment wirkt dieses Eingriffselement 36 bzw. 37 als Halteeinrichtung und verhindert so eine Relativverdrehung der beiden Kupplungselemente 25 und 39. Die Verdrehblockiereinrichtung 53 besitzt demnach einen Freilauf in Freilaufrichtung FR1 und eine Drehblockierung in Drehblockierrichtung DB1. Die Freilaufrichtung FR2 und die Drehblockierrichtung DB2 der Verdrehblockiereinrichtung 54 sind entgegengesetzt dazu orientiert.

Auf dem ringförmigen Kupplungselement 25 sind die Formschlussabschnitte 51 und 52 - in Umfangsrichtung gesehen - hintereinander und die Eingriffselemente 36 und 37 - ebenfalls in Umfangsrichtung gesehen - in Reihe und mit Abstand AB zueinander angeordnet, wobei dieser Abstand AB der Länge LG der beiden Formschlussabschnitte 51 und 52 eines Blockiereinrichtungspaares 55 entspricht. Jeweils zwei Formschlussabschnitte 51 und 52 eines Blockiereinrichtungspaares 55 sind außerdem mit Abstand zu dem benachbart liegenden Blockiereinrichtungspaar 55 mit seinen Formschlussabschnitten 51 und 52 abgeordnet, wobei zwischen zwei Formschlussabschnitten zweier benachbarter Blockiereinrichtungspaare 55 ein formschlussfreier Abschnitt 56' ausgebildet ist.

Jeder Formschlussabschnitt 51 und 52 wird durch jeweils einen Verzahnungsabschnitt mit jeweils mehreren - in Umfangsrichtung des ersten Kupplungselements 25 gesehen - hintereinander liegenden Zähnen 56 bzw. 57 realisiert, welche Zähne die Formschlusselemente 32 und 33 des ersten Kupplungselements 25 bilden. Außerdem ist jedes Eingriffselement 36 bzw. 37 des zweiten Kupplungselements als relativ zu dem jeweiligen Verzahnungsabschnitt bewegbar gelagerte Rastklinke mit zumindest einer Rastnase 58 bzw. 59 ausgebildet. Durch die Flankenform der Zähne 56, 57 und der Rastnasen 58 und 59 wird jeweils in Verdrehblockierrichtung DB1 bzw. DB2 eine selbsthemmende Wirkung entfaltet. In Freilaufrichtung FR 1 bzw. FR2 hingegen ist die Flankenform der Zähne 56, 57 und der Rastnase 58, 59 so gewählt, dass eine radial nach außen gerichtete Verlagerungsbewegung VB der Eingriffselemente 36 bzw. 37 unterstützt bzw. eingeleitet wird. Um die Selbsthemmung in Verdrehblockierrichtung DB1 bzw. DB2 und den Freilauf in Freilaufrichtung FR1 bzw. FR2 zu erhalten, kann jeder Verzahnungsabschnitt, also jeder Formschlussabschnitt 51 bzw. 52 als Sägeverzahnung 60 ausgeführt sein, wobei die Sägeverzahnung 60 des einen Verzahnungsabschnitts der einen Verdrehblockiereinrichtung 53 entgegengesetzt zur Sägeverzahnung 60 des anderen Verzahnungsabschnitts der anderen Verdrehblockiereinrichtung 54 eines Blockiereinrichtungspaares 55 orientiert ist. Die Sägeverzahnung zeichnet sich durch eine Flankenform aus, bei der eine Flanke 61 wesentlich steiler ausgebildet ist als die andere Flanke 62 eines Zahns 56 bzw. 57. Trifft die entsprechende Rastklinke mit dem steileren Flankenabschnitt 61 zusammen, ist die Selbsthemmung aktiv. Tritt die Rastnase 58 jedoch mit dem weniger steilen Flankenabschnitt 62 in Kontakt, wird die vorstehend erwähnte nach außen gerichtete Verlagerungsbewegung VB unterstützt bzw. eingeleitet.

Im Folgenden wird anhand der Fig. 6 bis 9 ein Trennen bzw. Wiederverbinden der Kupplung 13 näher beschrieben. Die Fig. 6 zeigt den gekoppelten Zustand der Kupplung 13, bei dem eine Drehmomentübertragung von dem einen Stabteil 7 zu dem anderen Stabteil 8 und umgekehrt möglich ist. Ausgehend von dieser in Fig. 6 zu sehenden Grundstellung der Kupplung 13 sind die Eingriffselemente 36 bzw. 37 mit dem - in Drehblockierrichtung DB1 bzw. DB2 gesehen - ersten Zahn 56 bzw. 57 des entsprechenden Formschlussabschnitts 51 bzw. 52 in Eingriff. Durch die Haltefedern 50 werden die Eingriffselemente 36 und 37 in dieser eingerasteten Position gehalten. Die Rastnasen 58, 59 wirken dabei mit der Flanken 61 zusammen, von denen die Rastnasen 58, 59 unter Last, d. h. beim Einleiten einer Umfangskraft UK, nicht von den jeweiligen Zähnen 56 bzw. 57 abrutschen können, sondern daran gehalten werden. Je nach dem, ob beispielsweise über den Stabteil 7 ein Drehmoment im Uhrzeigersinn (entspricht Drehblockierrichtung DB1) oder entgegengesetzt dazu (entspricht Drehrichtung DB2) eingebracht wird, ist eine der beiden Rastnasen 58 bzw. 59 ohne Umfangskraft UK und die andere Rastnase 59 bzw. 58 mit der Umfangskraft UK beaufschlagt, wodurch die beiden Kupplungselemente 25 und 39 in beiden Relativverdrehrichtungen RV spielfrei eingekuppelt sind.

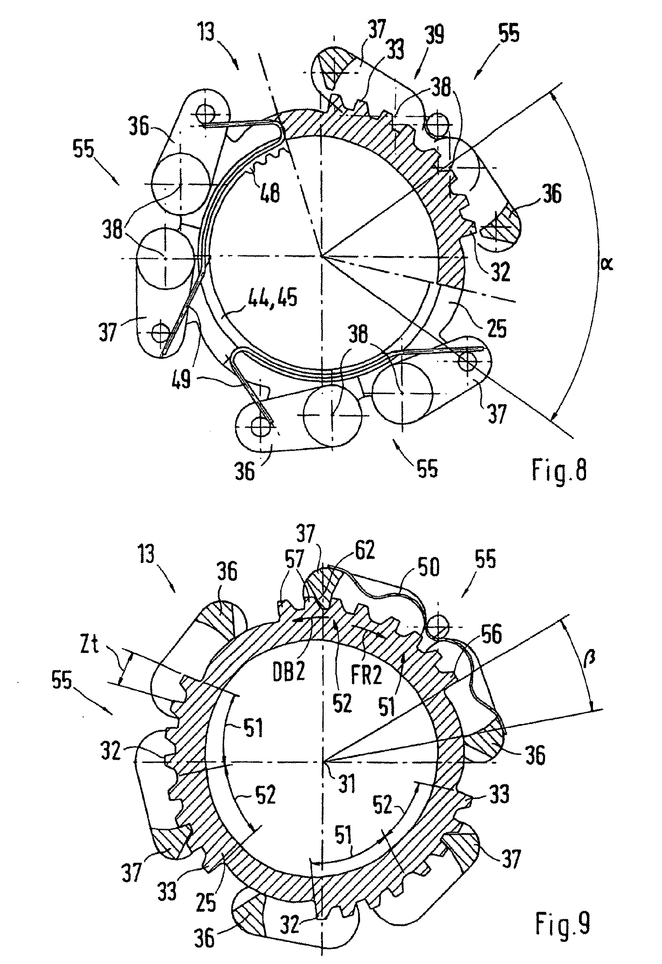

Zum Entkuppeln bzw. Trennen der Kupplung 13 kann beispielsweise ein Fahrer des Kraftfahrzeugs einen elektrischen Schalter im Fahrzeuginnern betätigen, so dass der Elektromotor 41 angesteuert wird, der das Planetengetriebe 46 beaufschlagt, wodurch die Schaltkulisse 44 gedreht wird und die Betätigungsfedern 49 vorgespannt werden. Das Eingriffselement 36 bzw. 37, welches gerade keine Umfangskraft UK erfährt, wird durch das Vorspannen der Betätigungsfedern 49 nach radial außen (entspricht Verlagerungsbewegung VB) bewegt und kommt so außer Eingriff mit dem jeweiligen Formschlusselement 32 bzw. 33. Bei einer Umkehr der Richtung der Umfangskraft UK wird das zweite Eingriffselement 37 oder 36 ebenfalls lastfrei und kann durch die vorgespannte Betätigungsfeder 49 ebenfalls nach außen verschwenkt werden. Somit ist die Kupplung 13 getrennt und die beiden Stabteile 7 und 8 bzw. die ersten und zweiten Kupplungselemente 25 und 39 können relativ zueinander verdreht werden, wie dies durch die Relativverdrehrichtung RV angegeben ist. Sind beide Eingriffselemente 36 und 37 verschwenkt, wie dies aus Fig. 8 hervorgeht, bleiben die Betätigungsfedern 49 vorgespannt, wodurch die Eingriffelemente 36 und 37 in der gezeigten Position verharren und nicht mit den Verzahnungsabschnitten am ersten Kupplungselement 25 zusammenwirken können. Über einen Freiwinkel α, der fahrzeugabhängig gewählt werden kann und hier beispielsweise +/- 35° beträgt, können die beiden Kupplungselemente 25 und 39 nun relativ zueinander verdreht werden.

Soll die Kupplung 13 wieder eingekuppelt werden, also die beiden Kupplungselemente 25 und 39 wieder miteinander zwecks Drehmomentübertragung verbunden werden, wird der Elektromotor 41 entgegengesetzt angesteuert, so dass die Schaltkulisse 44 wieder in Ausgangsstellung (Fig. 7) zurückgedreht, wodurch die Vorspannung der Betätigungsfedern 49 zurückgenommen wird. Das Wiedereinkuppeln der Kupplung 13 kann fahrgeschwindigkeitabhängig oder manuell vom Fahrer der Kraftfahrzeugs eingeleitet werden. Durch das Zurücknehmen der Vorspannung der Betätigungsfedern 49 werden die Eingriffselemente 36 und 37 durch die Haltefedern 50 entgegen der Verlagerungsbewegung VB zurückverschwenkt und kommen so auf dem Umfang des ersten Kupplungselements 25 zu liegen. Zumindest eines der Eingriffselemente 36 (Fig. 9) greift in den ihm zugeordneten Formschlussabschnitt 52 ein, wodurch die Drehblockierung in Drehblockierrichtung DB2 aktiv ist und lediglich eine Relatiwerdrehung RV des ersten und des zweiten Kupplungselements 25 und 39 in Freilaufrichtung FR2 möglich ist. Wird ein Drehmoment in Freilaufrichtung FR2 beispielsweise über den Stabteil 7 eingeleitet, wird das Eingriffselement 36 durch die Zahnflankenform 62 ausgehoben und rastet zwischen den nächsten beiden Zähnen 57 wieder ein. Bei einer weiteren Drehmomenteinleitung in Freilaufrichtung FR2 wiederholt sich dieser Vorgang, bis das Eingriffselement 36 mit dem ersten Zahn 57 seines Formschlussabschnitts 52 in Eingriff kommt. Gleichzeitig hat sich das Eingriffselement 37 an den ersten Zahn 56 des Formschlussabschnitts 51 angelegt, so dass die in Fig. 6 wiedergegebene Grundstellung der beiden Kupplungselemente 25 und 39 zueinander wieder hergestellt ist. Die beiden Formschlussabschnitte 51 und 52 liegen nun zwischen den beiden Eingriffselementen 36 und 37, die Kupplung 13 ist somit vollständig eingekuppelt und eine Relatiwerdrehung RV der beiden Kupplungselemente zueinander ist unterbunden. Wird also beim Wiedereinkuppeln der Kupplung 13 ein Drehmoment in der entsprechende Freilaufrichtung FR1 bzw. FR2 eingeleitet, wird das entsprechende Eingriffselement 36 bzw. 37 in Verlagerungsbewegung VB versetzt und kommt somit zwischen den beiden nächsten Zähnen 56 und 27 zu liegen und rastet dort ein. Dabei wird der maximale Freiwinkel β bei noch nicht vollständig eingekuppelter Kupplung 13 schrittweise in Abhängigkeit der Zahnteilung Zt der Verzahnungsabschnitte verringert. Der Abstand zweier benachbarter Spitzen der Zähne 56 bzw. 57 zueinander kann beispielsweise Zt = 5° betragen. Ein andere Zahnteilung Zt ist ebenfalls denkbar.

Fig. 4 zeigt noch eine Verriegelungseinrichtung 63, die an der drehbaren Schaltkulisse 44 vorgesehen sein kann und Haken 64 aufweist, die Riegelbolzen 65 an den Eingriffselementen 36 und 37 umgreifen, wenn die Kupplung 13 geschlossen ist. Soll die Kupplung 13 getrennt werden, werden durch das Verdrehen der Schaltkulissen 44 die Riegelbolzen 65 freigegeben und die Eingriffselemente 36 und 37 können durch die vorgespannte Betätigungsfeder 49 verschwenkt werden. Insbesondere sind die einseitig offenen Haken 64 einstückig mit dem Ring 45 hergestellt.

## Patentansprüche

1. Stabilisatoranordnung (5) für ein Kraftfahrzeug, die einen Torsionsstab (6) mit zwei Stabteilen (7, 8) aufweist, deren erste Enden (9, 10) jeweils mit einer Radaufhängung (3, 4) einer zwei Räder (2) umfassenden Radachse (1) verbindbar sind, welche Stabilisatoranordnung (5) außerdem eine die beiden benachbart zueinander liegenden zweiten Enden (11, 12) der Stabteile (7, 8) formschlüssig verbindende oder trennende Kupplung (13) mit einem ersten und zweiten Kupplungselement (25, 39) besitzt, welche Kupplungselemente (25, 39) zum formschlüssigen Verbinden jeweils wenigstens zwei Formschlusselemente (32 bis 35) besitzen und bei getrennter Kupplung (13) relativ zueinander verdrehbar sind, welche Formschlusselemente (32 bis 35) des ersten oder zweiten Kupplungselements (25, 39) daran bewegbar angelenkte Eingriffselemente (36, 37) bilden, die unabhängig voneinander bewegbar gelagert sind, wobei die Stabilisatoranordnung (5) weiterhin eine Betätigungseinrichtung (40) für das Trennen der Kupplung (13) aufweist, **dadurch gekennzeichnet, dass** die Formschlusselemente (32 bis 35) für das Trennen der Kupplung (13) unabhängig voneinander durch die Betätigungseinrichtung (40) verlagerbar sind, dass das erste Kupplungselement (25) wenigstens zwei Formschlussabschnitte (51, 52) mit mehreren - in Umfangsrichtung des ersten Kupplungselements (25) gesehen - in Reihe angeordneten Formschlusselementen (32, 33) besitzt, die mit den am zweiten Kupplungselement (39) vorgesehenen Eingriffselementen (36, 37) zusammenwirken, dass zwei Formschlussabschnitte (51, 52) mit den ihnen zugerichteten Eingriffselementen (36, 37) zwei Verdrehblockiereinrichtungen (53, 54) bilden, die zusammen ein Blockiereinrichtungspaar (55) darstellen, und dass die Kupplung (13) mehrere Blockiereinrichtungspaare (55) aufweist, die - in Umfangsrichtung des ersten bzw. zweiten Kupplungselements (25, 39) gesehen - verteilt angeordnet sind, dass jeweils benachbarte Blockiereinrichtungspaare (55) einen Abstand zueinander aufweisen, und dass zwischen zwei benachbarten Drehblockiereinrichtungspaaren (55) ein formschlussfreier Abschnitt (56') ausgebildet ist.

2. Stabilisatoranordnung nach Anspruch 1, **dadurch gekennzeichnet, dass** zwei Formschlussabschnitte (51, 52) mit den ihnen zugeordneten Eingriffselementen (36, 37) jeweils eine Verdrehblockiereinrichtung (53, 54) bilden, die ein Blockiereinrichtungspaar (55) darstellen, dass jede Verdrehblockiereinrichtung (53, 54) lediglich in eine Relatiwerdrehrichtung (RV) zwischen den beiden Kupplungselementen (25, 39) als Drehblockierung wirkt und in der anderen Relatiwerdrehrichtung (RV) einen Freilauf aufweist und dass die Drehblockierrichtung (DB1, DB2) und die Freilaufrichtung (FR1, FR2) der einen Verdrehblockiereinrichtung (53, 54) jeweils entgegengesetzt zu der Drehblockierrichtung (DB2, DB1) und der Freilaufrichtung (FR2, FR1) der anderen Verdrehblockiereinrichtung (54, 53) orientiert sind.

3. Stabilisatoranordnung nach Anspruch 1 oder 2, **dadurch gekennzeichnet, dass** die Formschlussabschnitte (51, 52) - in Umfangsrichtung des ersten Kupplungselements (25) gesehen - in Reihe angeordnet sind und die Eingriffselemente (36, 37) - in Umfangsrichtung des zweiten Kupplungselements (39) gesehen - in Reihe und mit Abstand (AB) zueinander liegen, wobei dieser Abstand (AB) der Länge (LG) der Formschlussabschnitte (51, 52) entspricht.

4. Stabilisatoranordnung nach einem der vorhergehenden Ansprüche, **dadurch gekennzeichnet, dass** die Eingriffselemente (36, 37) am zweiten Kupplungselement (39) radial verschwenkbar relativ zu den Formschlussabschnitten (51, 52) gelagert sind, die an der Umfangswand des ersten Kupplungselements (25) liegen.

5. Stabilisatoranordnung nach Anspruch 1, **dadurch gekennzeichnet, dass** die Eingriffselemente (36, 37) mit den Formschlusselementen (32, 33) durch die Kraft einer Haltefeder (50) in Eingriff miteinander gehalten sind.

6. Stabilisatoranordnung nach Anspruch 5, **dadurch gekennzeichnet, dass** jedes Eingriffselement (36, 37) über eine vorspannbare Betätigungsfeder (49) außer Eingriff mit dem jeweiligen Formschlusselement (32, 33) bringbar ist, wobei die von der vorgespannten Betätigungsfeder (49) bereitgestellte Betätigungskraft größer ist als die Kraft der Haltefeder (50).

7. Stabilisatoranordnung nach einem der vorhergehenden Ansprüche, **dadurch gekennzeichnet, dass** die Betätigungseinrichtung (40) einen Antrieb, vorzugsweise elektromotorischen Antrieb (41), und ein davon angetriebenes Schaltelement umfasst, das die Eingriffselemente (36, 37) unabhängig voneinander bewegt.

8. Stabilisatoranordnung nach Anspruch 6 oder 7, **dadurch gekennzeichnet, dass** die Betätigungseinrichtung (40) die Betätigungsfedern (49) vorspannt.

9. Stabilisatoranordnung nach Anspruch 1, **dadurch gekennzeichnet, dass** jeder Formschlussabschnitt (51, 52) durch einen Verzahnungsabschnitt mit jeweils mehreren - in Umfangsrichtung des ersten Kupplungselements (25) gesehen - hintereinander liegenden Zähnen (56, 57) realisiert ist, welche Zähne (56, 57) die Formschlusselemente (32, 33) des ersten Kupplungselements (25) bilden, und dass jedes Eingriffselement (36, 37) des zweiten Kupplungselements (39) als relativ zum entsprechenden Verzahnungsabschnitt bewegbar gelagerte Rastklinke mit zumindest einer Rastnase (58, 59) ausgebildet ist.

10. Stabilisatoranordnung nach Anspruch 9, **dadurch gekennzeichnet, dass** die Flankenform der Zähne (56, 57) und der Rastnase (58, 59) in Verdrehblockierrichtung (DB1, DB2) eine selbsthemmende und in Freilaufrichtung (FR1, FR2) eine Verlagerungsbewegung (VB), insbesondere nach radial außen gerichtete Schwenkbewegung, der Rastklinke unterstützende Kontur besitzen, wobei die Verlagerungsbewegung (VB) ein außer Eingriff bringen der Rastnasen (58, 59) von den Verzahnungsabschnitten bewirkt.

11. Stabilisatoranordnung nach Anspruch 9 oder 10, **dadurch gekennzeichnet, dass** jeder Verzahnungsabschnitt als Sägeverzahnung (60) ausgeführt ist, wobei die Sägeverzahnung (60) des einen Verzahnungsabschnitts der einen Verdrehblockiereinrichtung (53, 54) entgegengesetzt zur Sägeverzahnung (60) des anderen Verzahnungsabschnitts der anderen Verdrehblockiereinrichtung (54, 53) des Blockiereinrichtungspaares (55) orientiert ist.

## Claims

1. An anti-roll bar arrangement (5) for a motor vehicle, comprising a torsion bar (6) with two bar parts (7, 8), the first ends (9, 10) of which are each connectable to a wheel suspension (3, 4) of a wheel axle (1) carrying two wheels (2), which anti-roll bar arrangement (5) further comprises a coupling (13) which positively connects or disconnects the two adjacent second ends (11, 12) of the bar parts (7, 8) and has a first and a second coupling member (25, 39), which coupling members (25, 39) each have at least two positive-locking members (32 to 35) for producing the positive connection and are rotatable relative to one another when the coupling (13) is disconnected, which positive-locking members (32 to 35) of the first or second coupling member (25, 39) form engagement members (36, 37) which are movably articulated thereon and are mounted so as to be movable independently of one another, wherein the anti-roll bar arrangement (5) also has an actuating means (40) for disconnecting the coupling (13), **characterised in that** the positive-locking members (32 to 35) for separating the coupling (13) are displaceable independently of one another by the actuating means (40), **in that** the first coupling member (25) has at least two positive-locking portions (51, 52) with a plurality of positive-locking members (32, 33) which are arranged in a row - seen in the circumferential direction of the first coupling member (25) - and co-operate with the engagement members (36, 37) provided on the second coupling member (39), **in that** two positive-locking portions (51, 52) and the associated engagement members (36, 37) form two rotation-blocking devices (53, 54) which together form a blocking-device pair (55), and **in that** the coupling (13) has a plurality of blocking-device pairs (55) which are distributed over the circumference of the first or second coupling member (25, 39), **in that** respective adjacent blocking-device pairs (55) have mutual spacing, and **in that** a portion (56') free of a positive connection is formed between two adjacent pairs (55) of rotation-blocking devices.

2. An anti-roll bar arrangement according to claim 1, **characterised in that** two positive-locking portions (51, 52) with the associated engagement members (36, 37) each form a rotation-blocking device (53, 54) which together form a blocking-device pair (55), **in that** each rotation-blocking device (53, 54) blocks rotation in only one relative rotation direction (RV) between the two coupling members (25, 39) and is free-running in the other relative rotation direction (RV), and **in that** the rotation-blocking direction (DB1, DB2) and the free-running direction (FR1, FR2) of the one rotation-blocking device (53, 54) each run counter to the rotation-blocking direction (DB2, DB1) and the free-running direction (FR2, FR1) of the other rotation-blocking device (54, 53).

3. An anti-roll bar arrangement according to claim 1 or 2,
**characterised in that** the positive-locking portions (51, 52) are arranged in a row - seen in the circumferential direction of the first coupling member (25) - and the engagement members (36, 37) are arranged in a row and have mutual spacing (AB) - seen in the circumferential direction of the second coupling member (39) - wherein this spacing (AB) corresponds to the length (LG) of the positive-locking portions (51, 52).

4. An anti-roll bar arrangement according to any one of the preceding claims, **characterised in that** the engagement members (36, 37) are mounted on the second coupling member (39) so as to be radially pivotable relative to the positive-locking portions (51, 52), which lie against the circumferential wall of the first coupling member (25).

5. An anti-roll bar arrangement according to claim 1, **characterised in that** the engagement members (36, 37) and the positive-locking members (32, 33) are held in engagement with one another by the force of a retaining spring (50).

6. An anti-roll bar arrangement according to claim 5, **characterised in that** each engagement member (36, 37) can be disengaged from the respective positive-locking member (32, 33) by a prestressable actuating spring (49), wherein the actuating force exerted by the prestressed actuating spring (49) is greater than the force of the retaining spring (50).

7. An anti-roll bar arrangement according to any one of the preceding claims, **characterised in that** the actuating means (40) comprises a drive, preferably an electromotive drive (41), and a switching member which is driven by the latter and moves the engagement members (36, 37) independently of one another.

8. An anti-roll bar arrangement according to claim 6 or 7, **characterised in that** the actuating means (40) prestresses the actuating springs (49).

9. An anti-roll bar arrangement according to claim 1, **characterised in that** each positive-locking portion (51, 52) is formed by a toothed portion each having a plurality of teeth (56, 57) lying one behind the other - seen in the circumferential direction of the first coupling member (25) - which teeth (56, 57) form the positive-locking members (32, 33) of the first coupling member (25), and **in that** each engagement member (36, 37) of the second coupling member (39) is formed as a locking detent which is mounted so as to be movable relative to the corresponding toothed portion and has at least one locking projection (58, 59).

10. An anti-roll bar arrangement according to claim 9, **characterised in that** the flank forms of the teeth (56, 57) and the locking projection (58, 59) have a contour which, in the rotation-blocking direction (DB1, DB2), assists a self-locking movement and, in the free- , running direction (FR1, FR2), assists a displacement movement (VB), especially a radially outwardly directed pivoting movement, of the locking detent, wherein the displacement movement (VB) effects disengagement of the locking projections (58, 59) from the toothed portions.

11. An anti-roll bar arrangement according to claim 9 or 10, **characterised in that** each toothed portion is formed as saw toothing (60), wherein the saw toothing (60) of the one toothed portion of the one rotation-blocking device (53, 54) is orientated counter to the saw toothing (60) of the other toothed portion of the other rotation-blocking device (54, 53) of the blocking-device pair (55).

## Revendications

1. Dispositif de barre stabilisatrice (5) pour un véhicule automobile, qui présente une section en torsade avec deux parties de barre (7, 8), dont les premières extrémités (9, 10) peuvent être raccordées respectivement à une suspension de roue (3, 4) d'un essieu (1) comportant deux roues (2), lequel dispositif de barre stabilisatrice (5) possède en outre un dispositif d'accouplement (13) séparant ou reliant mécaniquement les deux extrémités (11, 12) adjacentes l'une par rapport à l'autre des parties de la barre (7, 8) avec un premier et un second élément d'accouplement (25, 39), lesquels éléments d'accouplement (25, 39) possèdent respectivement au moins deux éléments à crabot (32 à 35) pour un raccordement mécanique et peuvent se tourner l'un par rapport à l'autre dans le cas d'un dispositif d'accouplement (13) séparé, lesquels éléments à crabot (32 à 35) du premier ou du second élément d'accouplement (25, 39) forment des éléments d'engrenage (36, 37) articulés mobiles, qui sont placés de façon mobile indépendamment les uns des autres, le dispositif de barre stabilisatrice (5) présentant de plus un système de commande (40) pour la séparation du dispositif d'accouplement (13), **caractérisé en ce que** les éléments à crabot (32 à 35) peuvent être déplacés indépendamment les uns des autres par le système de commande (40) pour la séparation du dispositif d'accouplement (13), **en ce que** le premier élément d'accouplement (25) possède au moins deux sections à crabot (51, 52) avec plusieurs éléments à crabot (32, 33) disposés en série, prévus dans le sens de la périphérie du premier élément d'accouplement (25), lesquels éléments à crabot agissent conjointement avec les éléments d'engrenage (36, 37) prévus au niveau du second élément d'accouplement (39), **en ce que** deux sections à crabot (51, 52) forment deux dispositifs de blocage de torsion (53, 54) avec les éléments d'engrenage (36, 37) préparés pour eux, lesquels représentent ensemble une paire de dispositif de blocage (55), **en ce que** le dispositif d'accouplement (13) présente plusieurs paires de dispositif de blocage (55), prévues dans le sens de la périphérie du premier ou du second élément d'accouplement (25, 39), qui sont réparties, **en ce que** respectivement les paires adjacentes du dispositif de blocage (55) présentent un intervalle les unes par rapport aux autres et **en ce qu'**une section sans crabot (56') est formée entre deux paires de dispositif de blocage adjacentes (55).

2. Dispositif de barre stabilisatrice selon la revendication 1, **caractérisé en ce que** deux sections à crabot (51, 52) forment respectivement un dispositif de blocage de torsion (53, 54) avec les éléments d'engrenage (36, 37) qui leur sont affectés, qui représentent une paire de dispositif de blocage (55), **en ce que** chaque dispositif de blocage de torsion (53, 54) agit uniquement dans un sens de torsion relatif (RV) entre les deux éléments d'accouplement (25, 39) comme blocage de torsion et présente une course libre dans l'autre sens de torsion relatif (RV) et **en ce que** le sens de blocage de torsion (DB1, DB2) et le sens de la course libre (FR1, FR2) d'un des dispositifs de blocage de torsion (53, 54) sont orientés respectivement de façon opposée au sens de blocage de torsion (DB2, DB1) et au sens de la course libre (FR2, FR1) de l'autre dispositif de blocage de torsion (54, 53).

3. Dispositif de barre stabilisatrice selon la revendication 1 ou 2, **caractérisé en ce que** les sections à crabot (51, 52) sont disposées en série, prévues dans le sens de la périphérie du premier élément d'accouplement (25), et **en ce que** les éléments d'engrenage (36, 37) sont disposés en série, prévus dans le sens de la périphérie du second élément d'accouplement (39) et sont distants les uns des autres, moyennant quoi cet écart (AB) correspond à la longueur (LG) des sections à crabot (51, 52).

4. Dispositif de barre stabilisatrice selon l'une quelconque des revendications précédentes, **caractérisé en ce que** les éléments d'engrenage (36, 37) sont placés au niveau du second élément d'accouplement (39) de façon à pouvoir pivoter radialement par rapport aux sections à crabot (51, 52) qui se trouvent au niveau de la paroi circonférentielle du premier élément d'accouplement (25).

5. Dispositif de barre stabilisatrice selon la revendication 1, **caractérisé en ce que** les éléments d'engrenage (36, 37) sont maintenus engrenés avec les éléments à crabot (32, 33) par la force d'un ressort de maintien (50).

6. Dispositif de barre stabilisatrice selon la revendication 5, **caractérisé en ce que** chaque élément d'engrenage (36, 37) peut être amené en dehors de l'engrenage avec l'élément à crabot correspondant (32, 33) via un ressort de commande (49) pouvant être précontraint, la force d'entraînement préparée par le ressort de commande (49) précontraint étant supérieure à la force du ressort de maintien (50).

7. Dispositif de barre stabilisatrice selon l'une quelconque des revendications précédentes, **caractérisé en ce que** le système de commande (40) comprend un dispositif d'entraînement, de préférence un moteur d'entraînement électrique (41), et un élément logique commandé, lequel dispositif déplace les éléments d'engrenage (36, 37) indépendamment les uns des autres.

8. Dispositif de barre stabilisatrice selon la revendication 6 ou 7, **caractérisé en ce que** le système de commande (40) précontraint les ressorts de commande (49).

9. Dispositif de barre stabilisatrice selon la revendication 1, **caractérisé en ce que** chaque section à crabot (51, 52) est réalisée par une section dentée avec respectivement plusieurs dents (56, 57) se trouvant les unes derrière les autres, prévues dans le sens de la périphérie du premier élément d'accouplement (25), lesquelles dents (56, 57) forment les éléments à crabot (32, 33) du premier élément d'accouplement (25), et **en ce que** chaque élément d'engrenage (36, 37) du second élément d'accouplement (39) est formé comme loquet à cran d'arrêt avec au moins un tenon à cran d'arrêt (58, 59) placé de façon à pouvoir bouger par rapport à la section dentée correspondante.

10. Dispositif de barre stabilisatrice selon la revendication 9, **caractérisé en ce que** le flanc de denture des dents (56, 57) et du tenon à cran d'arrêt (58, 59) possèdent dans le sens de blocage de torsion (DB1, DB2) un mouvement autobloquant et dans le sens de la course libre (FR1, FR2) un mouvement de déplacement (VB), plus particulièrement un mouvement pivotant orienté radialement vers l'extérieur, du contour supportant le loquet à cran d'arrêt, le mouvement de déplacement (VB) entraînant la sortie de l'engrenage du tenon à cran d'arrêt (58, 59) des sections dentées.

11. Dispositif de barre stabilisatrice selon la revendication 9 ou 10, **caractérisé en ce que** chaque section dentée est réalisée comme denture en dents de scie (60), la denture en dents de scie (60) d'une des sections dentées d'un dispositif de blocage de torsion (53, 54) étant orientée à l'opposé de la denture en dents de scie (60) de l'autre section dentée de l'autre dispositif de blocage de torsion (54, 53) de la paire du dispositif de blocage (55).
